# EUROPEAN PATENT APPLICATION

(11) **EP 4 629 598 A1**
(43) Date of publication of application: **08.10.2025**
(21) Application number: 23909235.6
(22) Date of filing: 25.08.2023
(51) Int. Cl.: H04L 67/12

(54) **SERVICE SUBSCRIPTION METHOD AND APPARATUS, VEHICLE, AND STORAGE MEDIUM**

(30) Priority: 29.12.2022 CN 202211713661
(71) Applicant: Guangzhou Automobile Group Co., Ltd., Guangzhou, Guangdong 510030 (CN)
(72) Inventor: FEI, Hongliang, Guangzhou, Guangdong 511434 (CN); LI, Hui, Guangzhou, Guangdong 511434 (CN); SONG, Wenming, Guangzhou, Guangdong 511434 (CN); WANG, Jian, Guangzhou, Guangdong 511434 (CN); HUANG, Jiaman, Guangzhou, Guangdong 511434 (CN)
(74) Representative: Zaboliene, Reda
(86) International application number: PCT/CN2023/114916
(87) International publication number: WO 2024/139295

(57) **Abstract**

Embodiments of the present application provide a service subscription method, a device, a vehicle (110) and a storage medium, which relate to a field of the vehicle (110) and cloud service technology. The method uses the MQTT protocol to receive a subscription data packet sent from a cloud (120), the subscription data packet is encapsulated using the MQTT protocol, and the payload part of the subscription data packet includes a SOME/IP protocol structure, and the SOME/IP protocol structure includes a service identifier and a method identifier; the subscription data packet is parsed to obtain a service identifier and a method identifier; the service corresponding to the service identifier and the method identifier is subscribed, so that dynamic subscription of services can be realized, without presetting the maximum set of services required for subscription at the beginning of software design, and the required subscription services can be dynamically expanded according to demand, thereby improving a flexibility of service subscription, and reducing a configuration process of the configuration file, and improving software development efficiency.

## Description

### FIELD

Embodiments of the present application relate to a field of vehicle-to-cloud service technology, and in particular, to a service subscription method, a service subscription device, a vehicle, and a storage medium.

### BACKGROUND

Currently, the cloud usually collects vehicle data by using a method of sending configuration file, so as to avoid subsequent upgrades and changes for the vehicle. Namely, when collecting bus data of the vehicle, relevant signals need to be written in the configuration file in advance. After the vehicle is powered on, the cloud sends the configuration file to the vehicle. The vehicle collects relevant data according to the content of the configuration file, packages the relevant data and uploads the relevant data to the cloud. The method of sending configuration file requires sending the configuration file every time the vehicle data needs to be collected, and an overall process is cumbersome.

Considering the cumbersome process of the method of sending configuration file, it proposes to collect vehicle data in the cloud by using Message Queue Telemetry Transmission (MQTT) for service subscription. That is, all the data to be subscribed is preset in a software development processor, and a corresponding service node is allocated on the vehicle, for example, an Electronic Control Unit (ECU), uploads the subscribed data in the cloud through the service node. The method of using MQTT for service subscription requires presetting all the data to be subscribed in advance. If need to subscribe to other service nodes later, the configuration file needs to re-publish, which cannot realize dynamic service subscription and lacks flexibility.

In summary, the current method of collecting vehicle data in the cloud, that is, the service subscription method between the vehicle and the cloud, is still imperfect. The commonly method of issuing configuration files is cumbersome. The method of using MQTT for service subscription cannot realize dynamic service subscription, and the service subscription lack flexibility.

### SUMMARY

Embodiments of the present application provide a service subscription method, a service subscription device, a vehicle and a storage medium to improve the above problems.

In the first aspect, an embodiment of the present application provides a service subscription method. The method includes: using a Message Queuing Telemetry Transport (MQTT) protocol to receive a subscription data packet sent by a cloud, and the subscription data packet being encapsulated by using the MQTT protocol, and the payload part of the subscription data packet comprising a Scalable service-Oriented Middleware over IP (SOME/IP) protocol structure, and the SOME/IP protocol structure comprising a service identifier and a method identifier; parsing the subscription data packet and obtaining the service identifier and the method identifier; subscribing to the service corresponding to the service identifier and the method identifier.

In the second aspect, the embodiment of the present application provides a service subscription method. The method includes: obtaining a service and a subscription rule of the service; encapsulating the service by using a SOME/IP protocol according to a subscription format corresponding to the subscription rule of the service, and forming a SOME/IP protocol structure; encapsulating the SOME/IP protocol structure as a payload part of a MQTT protocol and forming a subscription data packet; using the MQTT protocol to send the subscription data packet to a vehicle's cloud agent, and the vehicle's cloud agent parsing the subscription data packet, and obtaining a service identifier and a method identifier, and subscribing to the service corresponding to the service identifier and the method identifier.

In a third aspect, an embodiment of the present application provides a service subscription device. The device includes: a signal receiving module, used to use a MQTT protocol to receive a subscription data packet sent by a cloud, wherein the subscription data packet is encapsulated by using the MQTT protocol, and a payload part of the subscription data packet comprises a SOME/IP protocol structure, and the SOME/IP protocol structure comprises a service identifier and a method identifier; a signal parsing module, used to parse the subscription data packet and obtain the service identifier and the method identifier; a service subscription module, used to subscribe to the service corresponding to the service identifier and the method identifier.

In a fourth aspect, an embodiment of the present application provides a service subscription device. The device includes: an information acquisition module, used to obtain a service and a subscription rule of the service; a first encapsulation module, used to encapsulate the service by using the SOME/IP protocol according to a subscription format corresponding to the subscription rule of the service and form a SOME/IP protocol structure, wherein the SOME/IP protocol structure comprises a service identifier and a method identifier; a second encapsulation module, used to encapsulate the SOME/IP protocol structure into a payload part of the MQTT protocol to form a subscription data packet; a signal sending module, used to send the subscription data packet to a vehicle's cloud agent using the MQTT protocol, so that the vehicle's cloud agent parses the subscription data packet, and obtains the service identifier and the method identifier, and subscribes to the service corresponding to the service identifier and the method identifier.

In a fifth aspect, an embodiment of the present application provides a vehicle. The vehicle includes a memory; one or more processors; one or more applications, the one or more applications are stored in the memory and are used to enable the vehicle to execute a method according to the above methods when invoked by the one or more processors.

In a sixth aspect, an embodiment of the present application provides a computer-readable storage medium. The computer-readable storage medium stores program codes, and the program codes are used to enable a vehicle to execute a method according to the above methods when invoked by one or more processors.

Embodiments of the present application provide a service subscription method, a device, a vehicle and a storage medium. The method can encapsulate the service identifier and method identifier with the SOME/IP protocol, and use the encapsulated SOME/IP protocol structure as a whole as the payload part of the MQTT protocol to form a subscription data packet. The subscription data packet is transmitted between the vehicle and the cloud through MQTT, so that the vehicle side can parse the subscription data packet to obtain the service identifier and method identifier, thereby subscribing to the service corresponding to the service identifier and method identifier, thereby realizing dynamic service subscription. There is no need to preset the maximum service set required for subscription in advance at the beginning of software design, and the required subscription services can be dynamically expanded according to demand, thereby improving the flexibility of service subscription. In addition, the configuration process of the configuration file can be reduced, thereby improving software development efficiency.

### BRIEF DESCRIPTION OF THE DRAWINGS

In order to more clearly illustrate technical solutions in the embodiments of the present application, the drawings required for use in the description of the embodiments will be briefly introduced below. Obviously, the drawings described below are only some embodiments of the present application. For those skilled in the art, other drawings can be obtained based on the drawings without paying any creative work.
FIG. 1 is a structural schematic diagram of t a service subscription system provided by an embodiment of the present application.
FIG. 2 is a flowchart of a service subscription method provided by an exemplary embodiment of the present application.
FIG. 3 is a flowchart of encapsulating data packet provided by an exemplary embodiment of the present application.
FIG. 4 is a flowchart of a service subscription method provided by an embodiment of the present application.
FIG. 5 is a flowchart of the service subscription method provided in an embodiment of the present application.
FIG. 6 is a flowchart of the service subscription method provided by an exemplary embodiment of the present application.
FIG. 7 is a flowchart of the service subscription method provided by an exemplary embodiment of the present application.
FIG. 8 is a flowchart of the service subscription method provided by an exemplary embodiment of the present application.
FIG. 9 is a flowchart of the service subscription method provided by an embodiment of the present application.
FIG. 10 is a flowchart of the service subscription method provided by an embodiment of the present application.
FIG. 11 is a flowchart of the service subscription method provided by an embodiment of the present application.
FIG. 12 is a flowchart of the service subscription method provided by an exemplary embodiment of the present application.
FIG. 13 is a flowchart of the service subscription method provided by an embodiment of the present application.
FIG. 14 is a structural schematic diagram of a service subscription device provided by an embodiment of the present application.
FIG. 15 is a structural schematic diagram of the service subscription device provided by an embodiment of the present application.
FIG. 16 is a structural schematic diagram of a vehicle provided by an embodiment of the present application.
FIG. 17 is a structural schematic diagram of a computer-readable storage medium provided by an embodiment of the present application.

### DETAILED DESCRIPTION

In order to enable those skilled in the art to better understand the solution of the present application, the technical solution in the embodiments of the present application will be clearly and completely described below in conjunction with the drawings in the embodiments of the present application.

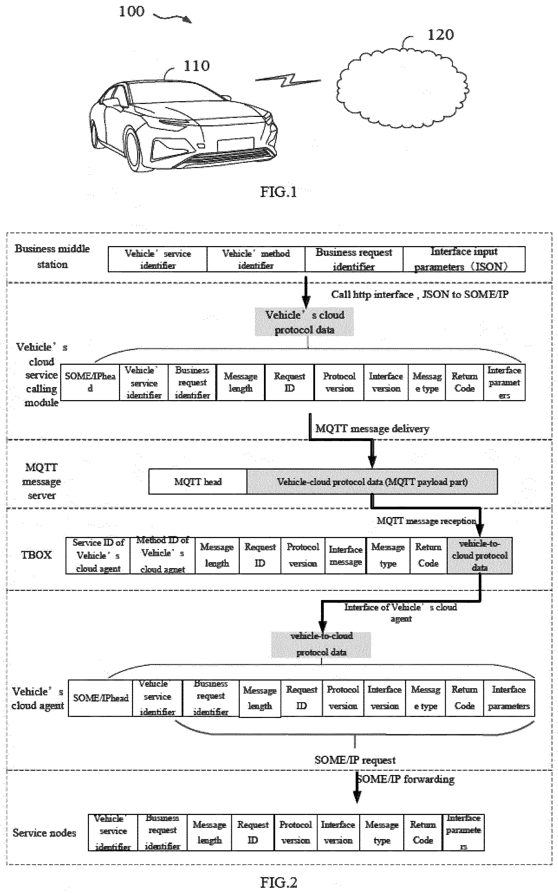

FIG. 1 is a structural schematic diagram of a service subscription system provided by an embodiment of the present application. The service subscription system 100 includes a vehicle 110 and a cloud 120. The vehicle 110 can communicate with the cloud 120 by an MQTT message server (MQTT broker), and the vehicle 110 and the cloud 120 use the MQTT protocol to communicate. The vehicle 110 can communicate with the cloud 120 by internally using a Scalable Service-Oriented Middleware over IP (SOME/IP) protocol running on the Internet Protocol (IP).

The vehicle 110 may be a gasoline vehicle or an electric vehicle, wherein the electric vehicle may be a pure electric vehicle, a hybrid vehicle, or a fuel cell vehicle. The vehicle 110 may include a Telematics BOX (referred to as TBOX ), vehicle's cloud agent and various service nodes. The vehicle's cloud agent can integrate one or more processors to process data. The service nodes can be used to implement various in-vehicle services, such as Service-Oriented Architecture (SOA) services. The service node may include a domain controller or an electronic control unit. The domain controller may include but is not limited to a central control unit and an infotainment domain controller.

The cloud 120 may include a business middle station, a vehicle's cloud service call module, and an MQTT message server. The business middle station is used to edit or modify business data, and encapsulate the business data into protocol structures such as XML, JSON, PROTOBUF, SOME/IP, etc. The vehicle's cloud service call module is used to encapsulate the business data into a SOME/IP protocol structure, and encapsulate the SOME/IP protocol structure into an MQTT message. The MQTT message server is used to send the MQTT message to the vehicle. The cloud 120 may also include a cloud metamodel, which is used to automatically trigger SOA service subscriptions based on trigger events input by relevant personnel to achieve automated service subscriptions. For example, if the trigger event is a low battery event, the cloud metamodel can automatically subscribe to the vehicle for SOA services related to the low battery event when it detects that the vehicle is in low battery, so that the vehicle can upload relevant data causing low battery to the cloud, which is convenient for troubleshooting the factors causing low battery and improving the automation of service subscription.

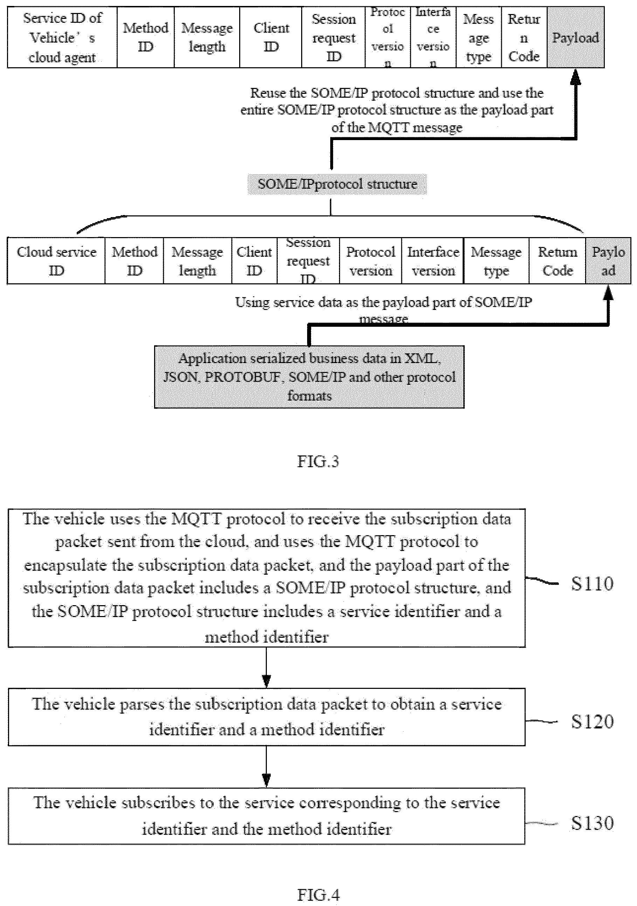

For ease of understanding, examples shown in FIG. 2 and 3 are provided to illustrate a data encapsulation method and data transmission process in the embodiment of the present application. As shown in FIG. 2, relevant personnel can edit or modify the business data through the business middle station of the cloud 120, and encapsulate the business data into a protocol structure such as XML, JSON, PROTOBUF, SOME/IP, etc.

The vehicle's cloud service calling module can use the protocol structure encapsulated with the business data as a payload part of the SOME/IP message to form a SOME/IP protocol structure (i.e., a SOME/IP message). The vehicle's cloud service calling module can use the entire SOME/IP message as the payload part of the MQTT message to form an MQTT message. As an example, as shown in FIG. 3, the serialized business data of the application adopts protocol structures such as XML, JSON, PROTOBUF, and SOME/IP. The business data is used as the payload part of the SOME/IP message, and the business data is encapsulated to form a SOME/IP protocol structure, i.e., a SOME/IP message. The SOME/IP protocol structure is reused, and the entire SOME/IP protocol structure is used as the payload part of the MQTT message, and the SOME/IP protocol structure is encapsulated to form an MQTT message (i.e., the subscription data packet mentioned below).

When the vehicle's cloud service calling module encapsulates the MQTT message, the MQTT message is sent to the MQTT message server. The MQTT message server uses the MQTT protocol to send the MQTT message to the vehicle 110.

The TBOX of the vehicle 110 may use the MQTT protocol to receive the MQTT message sent by the cloud 120. The TBOX may send the received MQTT message to the vehicle's cloud agent. The vehicle's cloud agent may parse the MQTT message to obtain the SOME/IP protocol structure, and use the SOME/IP protocol to send the SOME/IP protocol structure to each of the service nodes. Each of the service nodes may use the SOME/IP protocol to send data to the vehicle's cloud agent.

FIG. 4 is a flowchart of a service subscription method provided by an embodiment of the present application. The service subscription method can be applied to a vehicle 110 or a service subscription device 200 or a vehicle 400. The service subscription method can include the following steps S110 to S130.

Step S110, the vehicle uses the MQTT protocol to receive the subscription data packet sent from the cloud, and uses the MQTT protocol to encapsulate the subscription data packet, and the payload part of the subscription data packet includes a SOME/IP protocol structure, and the SOME/IP protocol structure includes a service identifier and a method identifier.

The subscription data packet in the embodiment of the present application adopts the MQTT protocol and is transmitted between the car and the cloud in the form of an MQTT message. The SOME/IP protocol structure encapsulated in the payload part of the subscription data packet refers to a complete SOME/IP message. The payload part of the SOME/IP message is encapsulated with business data. The original business data can be encapsulated in XML, JSON, PROTOBUF, SOME/IP and other protocol formats. The encapsulated business data can be used as the payload part of the SOME/IP message to form the SOME/IP protocol structure, that is, a complete SOME/IP message, so that the overall SOME/IP protocol structure including the business data can be subsequently encapsulated into the payload part of the MQTT message for transmission between the vehicle and the cloud.

As shown in Table 1, the SOME/IP protocol structure in the embodiment of the present application may include a service identifier (Service ID), a method identifier (Method ID), a message length (Length), a request identifier (Request ID), a protocol version, an interface version, a message type, a return code and a payload. Wherein, the Request ID may include a client identifier (Client ID) and a session request identifier (Session ID). The service identifier can be a service identifier of SOA. Please refer to Table 1 for the meaning and function of the above protocol structure content.

**Table 1**

| Content of the Protocol structure | Bytes | meaning and function |
|---|---|---|
| Service ID | 16 bits | Service ID, used to identify one service |
| Method ID | 16 bits | Method identifier, used to identify one method |
| Length | 32 bits | Message length |
| Client ID | 16 bits | Client request identifier, used to identify one client |
| Session ID | 16 bits | Session request identifier, used to identify one session request |
| Protocol Version | 8 bits | Protocol version, used to identify the protocol version |
| Interface Version | 8 bits | Interface version, used to identify the interface version |
| Message Type | 8 bits | Message type, used to identify the message type |
| Return Code | 8 bits | Return Code |
| Payload | Variable size | Payload, used to encapsulate business data |

In some embodiments, the vehicle's TBOX may use the MQTT protocol to receive the subscription data packet in the form of MQTT messages, and forward the subscription data packet to the vehicle's cloud agent.

Step S120, the vehicle parses the subscription data packet to obtain a service identifier and a method identifier.

The vehicle's cloud agent can obtain the payload part of the subscription data packet and obtain the SOME/IP protocol structure. If the message type of the SOME/IP protocol structure is a specified type, the service identifier and the method identifier are obtained from the SOME/IP protocol structure. The specified type can refer to the message type of the SOA service. For example, the specified type can be the SOA message type " Message Type Request ". When the specified type is in the SOME/IP protocol structure, it is determined that the service subscribed by the cloud is a SOA service. At this time, the service identifier and the method identifier can be obtained from the SOME/IP protocol structure, so as to automatically address corresponding to the service identifier and the method identifier in the SOA architecture based on the basic architecture of SOA, that is, the service node (such as an electronic control unit or a domain controller ) corresponding to the service identifier and method identifier is found in the SOA architecture according to the service identifier and method identifier, so as to subscribe to the SOA service to the found service node.

Step S130, the vehicle subscribes to the service corresponding to the service identifier and the method identifier.

In some embodiments, the vehicle's cloud agent can search for a service node corresponding to the service identifier and the method identifier based on the SOA architecture; and use the SOME/IP protocol to send the SOME/IP protocol structure to the service node to subscribe to the service corresponding to the service identifier and the method identifier.

The embodiments provided by the present application can encapsulate the service identifier and the method identifier with the SOME/IP protocol, and use the encapsulated SOME/IP protocol structure as the payload part of the MQTT protocol to form the subscription data packet. The subscription data packet is transmitted between the vehicle and the cloud through the MQTT, so that the vehicle can parse the subscription data packet to obtain the service identifier and method identifier, thereby subscribing to the service corresponding to the service identifier and method identifier, and realizing dynamic service subscription. There is no need to preset the maximum set of services required for subscription in advance at the beginning of software design, and the required subscription services can be dynamically expanded according to demand, thereby improving the flexibility of service subscription. In addition, the configuration process of the configuration file can be reduced, thereby improving software development efficiency.

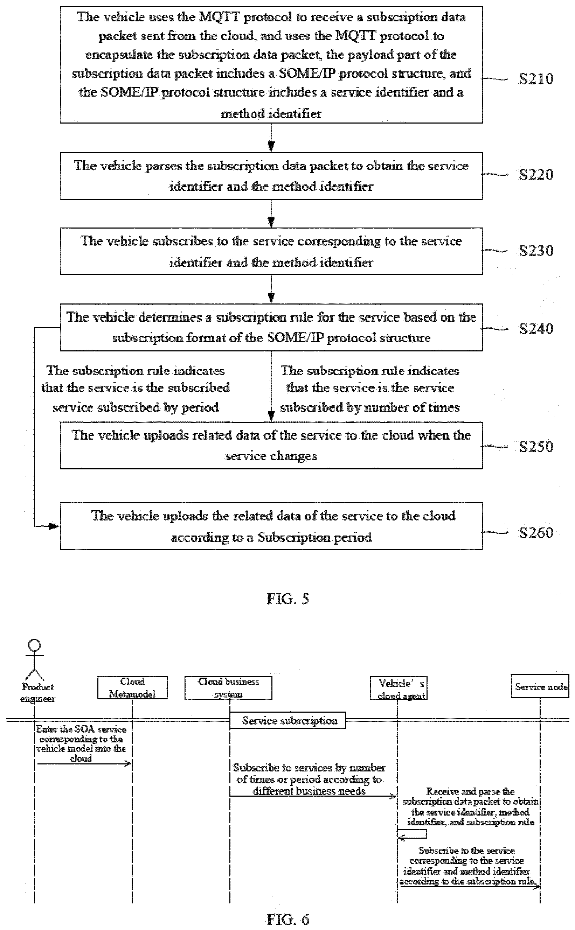

FIG. 5 is a flowchart of a service subscription method provided by an embodiment of the present application. The service subscription method can be applied to the vehicle 110 or the service subscription device 200 or the vehicle 400. The service subscription method can include the following steps S210 to S260.

Step S210, the vehicle uses the MQTT protocol to receive a subscription data packet sent from the cloud, and uses the MQTT protocol to encapsulate the subscription data packet, the payload part of the subscription data packet includes a SOME/IP protocol structure, and the SOME/IP protocol structure includes a service identifier and a method identifier.

Step S220, the vehicle parses the subscription data packet to obtain the service identifier and the method identifier.

Step S230, the vehicle subscribes to the service corresponding to the service identifier and the method identifier.

Wherein, for the detailed description of steps S210 to S230, please refer to the above steps S110 to S130.

Step S240, the vehicle determines a subscription rule for the service based on the subscription format of the SOME/IP protocol structure.

The subscription format in the embodiment of the present application includes a format subscribed by number of times and a format subscribed by period, so as to distinguish whether the service subscribed by the cloud is the format subscribed by number of times or by period. The format subscribed by number of times and the format subscribed by period can be set according to actual needs.

The subscription rule of the service corresponds to the subscription format. That is, if the subscription format of the SOME/IP protocol structure is the format subscribed by number of times, the subscription rule of the service represents that the service is a service subscribed by number of times; if the subscription format of the SOME/IP protocol structure is the format subscribed by period, the subscription rule of the service represents that the service is a service subscribed by period.

As an example, as shown in FIG. 6, a product engineer enters the SOA service corresponding to the vehicle model into the cloud metamodel in the cloud. The cloud business system can determine the service subscribed by number of times or by period according to different business needs, and compose the subscription data packet according to the corresponding subscription format and SOME/IP format, and send the subscription data packet to the vehicle's cloud agent. The vehicle's cloud agent receives and parses the subscription data packet to obtain the service identifier, the method identifier and the subscription rule. The vehicle's cloud agent can subscribe to the SOA service corresponding to the service identifier and method identifier according to the subscription rules.

If the subscription rule indicates that the service is the service subscribed by number of times, when the service changes, the relevant data of the service is uploaded to the cloud, that is, step S250 is executed.

If the subscription rule indicates that the service is the subscribed service subscribed by period, the relevant data of the service is reported to the cloud according to a subscription period, and step S260 is executed.

Step S250, the vehicle uploads related data of the service to the cloud when the service changes.

In the case of the subscribing service subscribed by number of times, the vehicle's cloud agent can upload relevant data of the service to the cloud when detecting changes in the service.

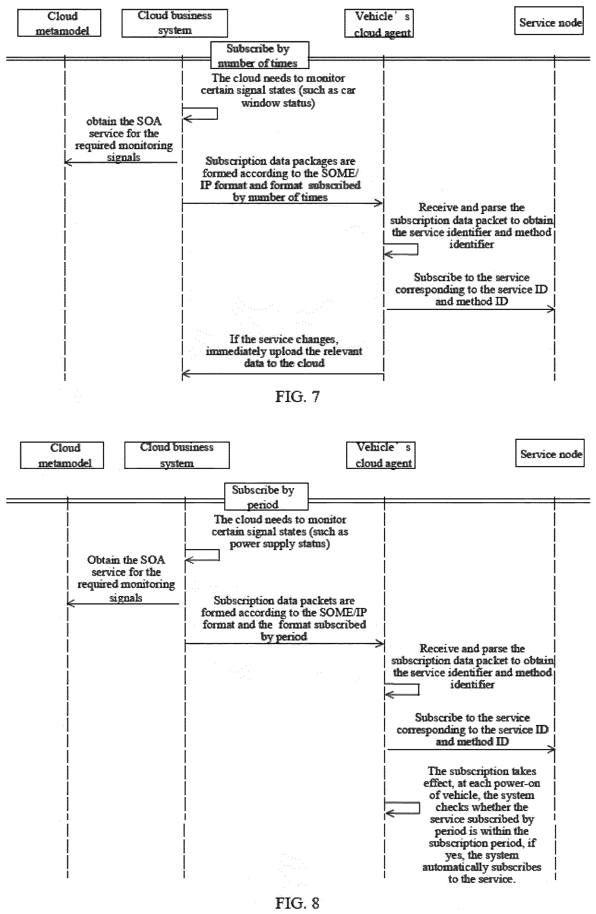

As an example, as shown in FIG. 7, when the cloud business system currently needs to monitor certain signal states (such as a window state) in the cloud, it obtains a SOA service of the signal to be monitored, forms the subscription data packet in the SOME/IP format and the format subscribed by number of times, and sends the subscription data packet to the vehicle's cloud agent. The vehicle's cloud agent receives and parses the subscription data packet, and obtains the service identifier and method identifier, and subscribes to the service corresponding to the service identifier and method identifier. When the monitored service changes, the vehicle's cloud agent immediately uploads the relevant data of the service to the cloud.

Step S260, the vehicle uploads the related data of the service to the cloud according to a Subscription period.

In the case of subscribing service by period, the vehicle's cloud agent can uploads the relevant data of the service to the cloud according to the subscription period. The subscription period can be set according to actual needs. After the subscription period is set, the subscription period can also be modified according to actual needs to end, extend or shorten the subscription period.

As an example, as shown in FIG. 8, when the cloud business system needs to continuously detect certain signal states (such as a power feeding state), it obtains the SOA service to be monitored and forms the subscription data packet in the SOME/IP format and the format subscribed by period. The vehicle's cloud agent receives and parses the subscription data packet, obtains the service identifier and method identifier, and subscribes to the service corresponding to the service identifier and method identifier. The subscription takes effect when the vehicle's cloud agent receives a response from the service node. The vehicle's cloud agent can report the relevant data of the service to the cloud according to the subscription cycle.

Compared with the service subscription method shown in FIG. 4, the service subscription method shown in FIG. 5 can further have the following technical effects: SOA services can be subscribed by number of times or period, which can improve the flexibility of SOA service subscription.

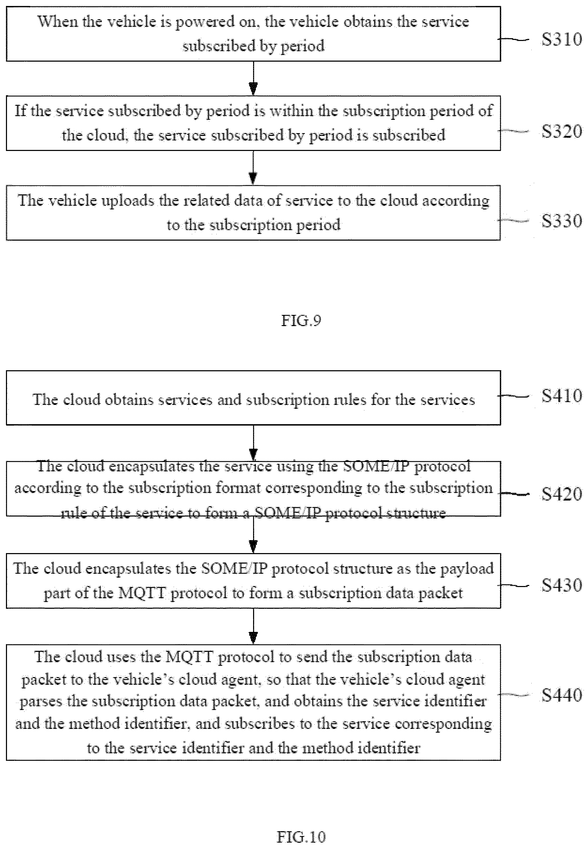

It should be noted that, in the case of subscribing service by period, the service subscription method shown in FIG. 5 may also include the following steps S310 to S330 as shown in FIG. 9.

Step S310, when the vehicle is powered on, the vehicle obtains the service subscribed by period.

As shown in FIG. 8, the vehicle's cloud agent can obtain the service subscribed by period each time the vehicle is powered on, and query whether the service subscribed by period is within the subscription period. If the periodically subscribed service is within the subscription period of the cloud, the vehicle's cloud agent can automatically subscribe to the service subscribed by period, that is, execute step S320. If the periodically subscribed service is not within the subscription period of the cloud, the vehicle's cloud agent does not perform any operation or the vehicle's cloud agent can send a prompt message to the cloud to prompt that the service subscribed by period has expired, so that the cloud can perform corresponding processing.

Step S320, if the service subscribed by period is within the subscription period of the cloud, the service subscribed by period is subscribed.

Step S330, the vehicle uploads the related data of service to the cloud according to the subscription period.

Wherein, for the detailed description of step S320 and step S330, please refer to the relevant description of the above-mentioned step S130, step S240 and step S260, which will not be repeated here.

It should be noted that steps S310 to S330 may be executed before step S110, may be executed when the vehicle is powered off and then on after step S130 is completed, may be executed before step S210, and may also be executed when the vehicle is powered off and then on after step S260 is completed.

Compared with the service subscription method shown in FIG. 5, the service subscription method shown in FIG. 9 can further have the following technical effects: it can automatically subscribe to the services subscribed by period belonging to the subscription period each time the vehicle is powered on, which can avoid the cloud from sending subscription data packets multiple times within the subscription period, and can also prompt the cloud that the services subscribed by period that exceeds the subscription period have expired, thereby improving the autonomy and integrity of SOA service subscriptions.

FIG. 10 is a flowchart of a service subscription method provided by an embodiment of the present application. The service subscription method can be applied to the cloud 120 or the service subscription device 300. The service subscription method can include the following steps S410 to S440.

Step S410, the cloud obtains services and subscription rules for the services.

The services in all embodiments of the present application refer to SOA services. The subscription rules of the services can be formulated by product engineers according to business requirements, or the product engineers can input business requirements into the cloud metamodel, and the cloud metamodel generates subscription rules corresponding to the business requirements.

In some embodiments, the cloud can obtain services corresponding to vehicle models in a service-oriented architecture; and determine the subscription rules for services based on business needs. For example, when the cloud needs to monitor certain signals (such as monitoring the status of vehicle lights), it can subscribe to SOA services by number of times. For another example, when the cloud needs to continuously monitor certain signals (such as monitoring the power feeding status), it can subscribe to services by period.

Step S420, the cloud encapsulates the service using the SOME/IP protocol according to the subscription format corresponding to the subscription rule of the service to form a SOME/IP protocol structure.

As mentioned above, the subscription rule corresponds to the subscription format, and the subscription format includes a format subscribed by number of times and a format subscribed by period. The content of the SOME/IP protocol structure is shown in Table 1 above. The SOME/IP protocol structure refers to the entire SOME/IP message.

In some embodiments, if the subscription rule of the service indicates that the service is the service subscribed by number of times, the service is encapsulated by using a single subscription format and the SOME/IP protocol to form a SOME/IP protocol structure.

In some embodiments, if the subscription rule of the service indicates that the service is a service subscribed by period, the service is encapsulated by using a periodic subscription format and the SOME/IP protocol to form a SOME/IP protocol structure.

As an example, as shown in FIG. 2 and 3, the cloud can write the business data corresponding to the SOA service into the payload part of the SOME/IP protocol structure, and write the service identifier and the method identifier corresponding to the SOA service into the cloud's service identifier part and the method identifier part of the SOME/IP protocol structure to form the SOME/IP protocol structure.

Step S430, the cloud encapsulates the SOME/IP protocol structure as the payload part of the MQTT protocol to form a subscription data packet.

As shown in FIG. 2 and 3, the cloud can write the SOME/IP protocol structure into the payload part of the MQTT message to form the subscription data packet. That is, the subscription data packet is transmitted between the vehicle and the cloud in the form of MQTT.

Step S440, the cloud uses the MQTT protocol to send the subscription data packet to the vehicle's cloud agent, so that the vehicle's cloud agent parses the subscription data packet, and obtains the service identifier and the method identifier, and subscribes to the service corresponding to the service identifier and the method identifier.

As shown in FIG. 2, the cloud sends the subscription data packet to the vehicle's cloud agent through the MQTT message server.

The service subscription method provided in the embodiment of the present application can encapsulate the service identifier and the method identifier with the SOME/IP protocol, and use the encapsulated SOME/IP protocol structure as the payload part of the MQTT protocol to form the subscription data packet. The subscription data packet is transmitted between the vehicle and the cloud through MQTT, so that the vehicle side can parse the subscription data packet to obtain the service identifier and method identifier, thereby subscribing to the service corresponding to the service identifier and method identifier, thereby realizing dynamic service subscription. There is no need to preset a maximum set of services required for subscription in advance at the beginning of software design, and the required subscription services can be dynamically expanded according to demand, thereby improving the flexibility of service subscription. In addition, the configuration process of the configuration file can be reduced, thereby improving software development efficiency.

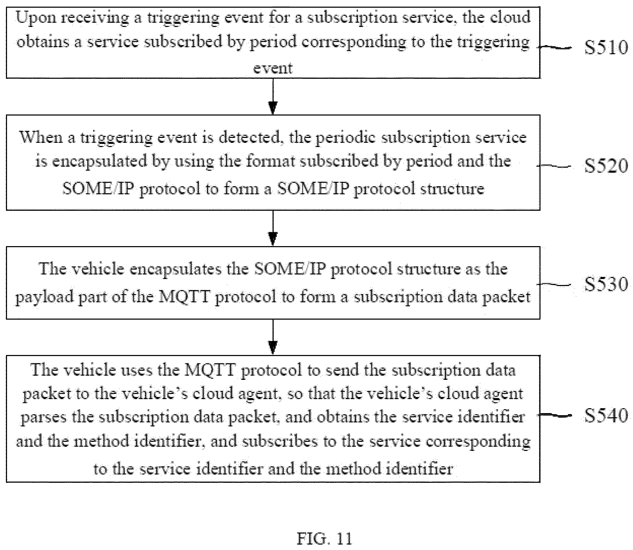

FIG. 11 is a flowchart of a service subscription method provided by an embodiment of the present application. The service subscription method can be applied to the cloud 120 or the service subscription device 300. The service subscription method can include the following steps S510 to S540.

Step S510, upon receiving a triggering event for a subscription service, the cloud obtains a service subscribed by period corresponding to the triggering event.

Wherein, the trigger event is entered by a cloud engineer into the cloud and stored in the cloud business system. The trigger event usually triggers a service that is subscribed on a periodic basis, for example, the trigger event is a detected black screen signal.

In some embodiments, when the cloud business system receives a trigger event for a subscription service, it can obtain the service corresponding to the trigger event and the service is periodically subscribed, so that when the trigger event is subsequently monitored, the service subscribed by period corresponding to the trigger event can be packaged and delivered to the vehicle's cloud agent.

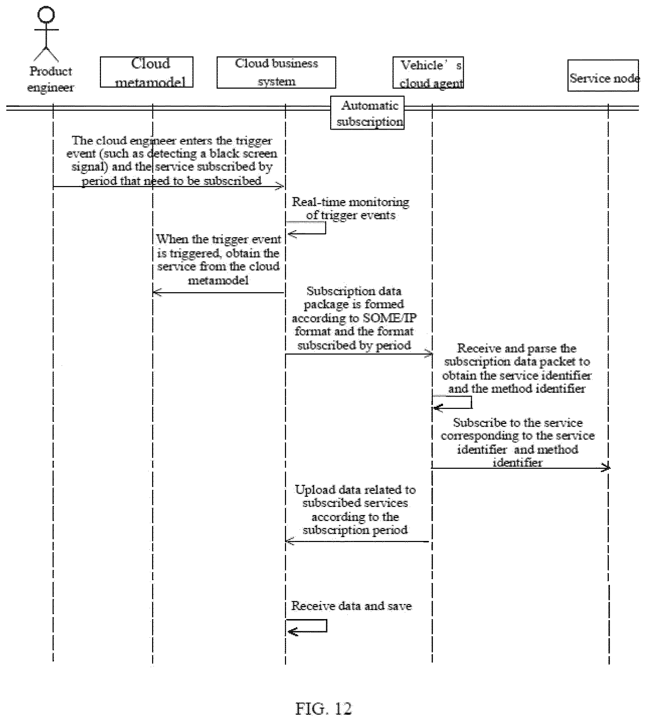

In some embodiment, the cloud business system obtains the service corresponding to the trigger event when the trigger event is detected. As an example, as shown in FIG. 12, the product engineer enters the trigger event (e.g., a black screen signal is detected) and the service to be subscribed to the cloud business system. The cloud business system can monitor in real time whether the trigger event is triggered. When the trigger event is detected, the cloud business system obtains the service subscribed by period from the cloud metamodel and packages the service, that is, executes steps S520 to S540.

Step S520, when a triggering event is detected, the periodic subscription service is encapsulated by using the format subscribed by period and the SOME/IP protocol to form a SOME/IP protocol structure.

The cloud business system can monitor in real time whether the trigger event is triggered, and when the trigger event is triggered, the format subscribed by period and the SOME/IP protocol are used to encapsulate the periodic subscription service to form the SOME/IP protocol structure. For a detailed description of step S520, please refer to the above step S420.

Step S530, the vehicle encapsulates the SOME/IP protocol structure as the payload part of the MQTT protocol to form a subscription data packet.

Step S540, the vehicle uses the MQTT protocol to send the subscription data packet to the vehicle's cloud agent, so that the vehicle's cloud agent parses the subscription data packet, and obtains the service identifier and the method identifier, and subscribes to the service corresponding to the service identifier and the method identifier.

Wherein, for the detailed description of step S530 and step S540, please refer to the above-mentioned step S430 and step S440.

Compared with the service subscription method shown in FIG. 10, the service subscription method shown in FIG. 11 may further have the following technical effects: the subscription of SOA services may be automatically triggered according to triggering events, thereby improving the autonomy and flexibility of SOA service subscription.

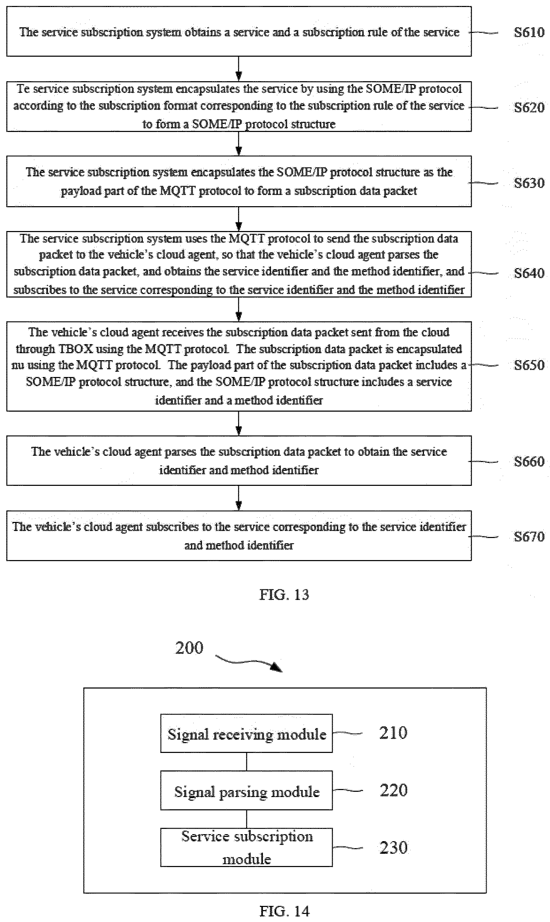

FIG. 13 is a flowchart of a service subscription method provided by an embodiment of the present application. The service subscription method can be applied to the service subscription system 100. The service subscription method can include the following steps S610 to S670.

Step S610, the service subscription system obtains a service and a subscription rule of the service.

Step S620, the service subscription system encapsulates the service by using the SOME/IP protocol according to the subscription format corresponding to the subscription rule of the service to form a SOME/IP protocol structure.

Step S630, the service subscription system encapsulates the SOME/IP protocol structure as the payload part of the MQTT protocol to form a subscription data packet.

Step S640, the service subscription system uses the MQTT protocol to send the subscription data packet to the vehicle's cloud agent, so that the vehicle's cloud agent parses the subscription data packet, and obtains the service identifier and the method identifier, and subscribes to the service corresponding to the service identifier and the method identifier.

Step S650, the vehicle's cloud agent receives the subscription data packet sent from the cloud through TBOX using the MQTT protocol. The subscription data packet is encapsulated nu using the MQTT protocol. The payload part of the subscription data packet includes a SOME/IP protocol structure, and the SOME/IP protocol structure includes a service identifier and a method identifier.

Step S660, the vehicle's cloud agent parses the subscription data packet to obtain the service identifier and method identifier.

Step S670, the vehicle's cloud agent subscribes to the service corresponding to the service identifier and method identifier.

Step S610 to step S670, please refer to the relevant parts of the above embodiment, which will not be repeated here.

The service subscription method provided in the embodiment of the present application can encapsulate the service identifier and method identifier with the SOME/IP protocol, and use the whole encapsulated SOME/IP protocol structure as the payload part of the MQTT protocol to form a subscription data packet. The subscription data packet is transmitted between the vehicle and the cloud through MQTT, so that the vehicle side can parse the subscription data packet to obtain the service identifier and method identifier, thereby subscribing to the service corresponding to the service identifier and method identifier, thereby realizing dynamic service subscription. There is no need to preset the maximum set of services required for subscription in advance at the beginning of software design, and the required subscription services can be dynamically expanded according to demand, thereby improving the flexibility of service subscription. In addition, the configuration process of the configuration file can be reduced, thereby improving software development efficiency.

It should be noted that the above-mentioned embodiments are only a partial enumeration of the service subscription method. Those skilled in the art should understand that the various method steps in the service subscription method shown in FIGs 4, 5, 9, 10, 11, and 13 of the embodiments of the present application can be arbitrarily combined to form new embodiments, and these new embodiments also fall within the scope of protection of the embodiments of the present application.

FIG. 14 is a structural schematic diagram of a service subscription device provided by an embodiment of the present application. The service subscription device 200 may be applied to the vehicle 110 or the vehicle 400. The service subscription device 200 may include a signal receiving module 210, a signal parsing module 220 and a service subscription module 230.

The signal receiving module 210 is used to use the MQTT protocol to receive a subscription data packet sent by the cloud, and the subscription data packet is encapsulated by using the MQTT protocol, and the payload part of the subscription data packet includes a SOME/IP protocol structure, and the SOME/IP protocol structure includes a service identifier and a method identifier.

The signal parsing module 220 is used to parse the subscription data packet and obtain the service identifier and the method identifier.

The service subscription module 230 is used to subscribe to the service corresponding to the service identifier and the method identifier.

In some embodiments, the signal parsing module 220 is further used to obtain the payload part of the subscription data packet to obtain a SOME/IP protocol structure; if the message type of the SOME/IP protocol structure is a specified type, obtain the service identifier and the method identifier from the SOME/IP protocol structure.

In some embodiments, the service subscription module 230 is further used to search for a service node corresponding to the service identifier and the method identifier based on a service-oriented architecture; and use the SOME/IP protocol to send the SOME/IP protocol structure to the service node to subscribe to the service corresponding to the service identifier and the method identifier.

In some embodiments, the service subscription module 230 is also used to determine the subscription rule of the service based on the subscription format of the SOME/IP protocol structure before subscribing to the service corresponding to the service identifier and the method identifier; if the subscription rule indicates that the service is a service subscribed by number of times, the relevant data of the service is uploaded to the cloud when the service changes.

In some embodiments, the service subscription module 230 is further used to upload relevant data of the service to the cloud according to the subscription period if the subscription rule indicates that the service is a service subscribed by period.

In some embodiments, the service subscription module 230 is also used to query whether the service subscribed by period is within the subscription period of the cloud when the vehicle is powered on; if the service is within the subscription period of the cloud, the service subscribed by period is subscribed.

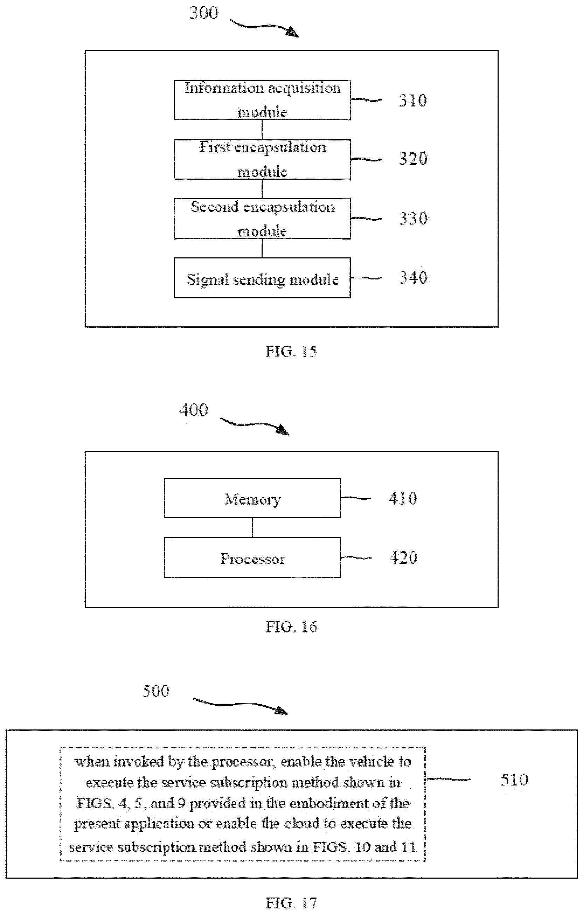

FIG. 15 is a structural schematic diagram of a service subscription device provided by an embodiment of the present application. The service subscription device 300 can be applied to the cloud 120. The service subscription device 300 can include an information acquisition module 310, a first encapsulation module 320, a second encapsulation module 330 and a signal sending module 340.

The information acquisition module 310 is used to acquire services and subscription rules of the services.

The first encapsulation module 320 is used to encapsulate the service according to the subscription format corresponding to the subscription rule of the service by using the SOME/IP protocol to form a SOME/IP protocol structure, wherein the SOME/IP protocol structure includes a service identifier and a method identifier.

The second encapsulation module 330 is used to encapsulate the SOME/IP protocol structure into a payload part of the MQTT protocol to form a subscription data packet.

The signal sending module 340 is used to send the subscription data packet to the vehicle's cloud agent by using the MQTT protocol, so that the vehicle's cloud agent parses the subscription data packet, and obtains the service identifier and the method identifier, and subscribes to the service corresponding to the service identifier and the method identifier.

In some embodiments, the first encapsulation module 320 is further used to encapsulate the service by using a single subscription format and the SOME/IP protocol to form a SOME/IP protocol structure if the subscription rule of the service indicates that the service is a service subscribed by period.

In some implementations, the first encapsulation module 320 is further configured to encapsulate the service by using a format subscribed by period and the SOME/IP protocol to form a SOME/IP protocol structure if the subscription rule of the service indicates that the service is a service subscribed by period.

In some embodiments, the first encapsulation module 320 is further used to, before encapsulating the SOME/IP protocol structure as the payload part of the MQTT protocol to form the subscription data packet, upon receiving the trigger event for a subscription service, obtain the service subscribed by period corresponding to the trigger event; and when the trigger event is detected, the first encapsulation module 320 encapsulates the service by using a periodic subscription format and the SOME/IP protocol to form a SOME/IP protocol structure.

In some implementations, the information acquisition module 310 is further used to obtain services corresponding to vehicle models in a service-oriented architecture; and determine subscription rules for services according to business needs.

Those skilled in the art can clearly understand that the service subscription device 200 provided in the embodiment of the present application can implement the service subscription method shown in FIG. s 4, 5, and 9 provided by the embodiment of the present application, and the service subscription device 300 can implement the service subscription method shown in FIG. s 10 and 11 provided in the embodiment of the present application. The specific working process of the above-mentioned devices and modules can refer to the corresponding process of the corresponding service subscription method in the embodiment of the present application, which will not be repeated here.

In the embodiments provided in the present application, the coupling, direct coupling or communication connection between the modules shown or discussed may be indirect coupling or communication coupling through some interfaces, devices or modules, and may be electrical, mechanical or other forms, and the embodiments of the present application are not limited to these.

In addition, each service node in the embodiment of the present application can be integrated into a processing module, or each module can exist physically separately, or two or more modules can be integrated into one module. The above-mentioned integrated module can be implemented in the form of hardware or in the form of a software service node, which is not limited in the embodiment of the present application.

FIG. 16 is a structural schematic diagram of a vehicle provided in an embodiment of the present application. The vehicle 400 may be the same as the above-mentioned vehicle 110. The vehicle 400 may include one or more of the following components: a memory 410, one or more processors 420, and one or more applications, wherein the one or more applications may be stored in the memory 410 and configured to enable the vehicle 400 to execute the service subscription method shown in FIGS. 4, 5, and 9 when invoked by the one or more processors 420.

The processor 420 may include one or more processing cores. The processor 420 uses various interfaces and lines to connect various parts of the entire vehicle 400, and is used to run or execute instructions, programs, code sets or instruction sets stored in the memory 410, and invoke to run or execute data stored in the memory 410, perform various functions of the vehicle 400 and process data.

The processor 420 may use a Digital Signal Processing (DSP), a Field-Programmable Gate Array (FPGA), a Programmable Logic Array ( PLA ).

The processor 420 may be integrated with a Central Processing Unit (CPU), an Graphics Processing Unit (CPU), and one or a combination of modems. Wherein, the GPU mainly processes an operating system, a user interface, and application programs, etc.; the GPU is responsible for rendering and drawing display content; and the modem is used to process wireless communications. It is understandable that the above-mentioned modem may not be integrated into the processor 420, but may be implemented separately through a communication chip.

The memory 410 may include a Random Access Memory (RAM), can also include Read-Only Memory (ROM). The memory 410 may be used to store instructions, programs, codes, code sets or instruction sets. The memory 410 may include a program storage area and a data storage area. The program storage area may store instructions for implementing an operating system, instructions for implementing at least one function, instructions for implementing the above-mentioned various method embodiments, etc. The data storage area may store data created by the vehicle 400 during use, etc.

FIG. 17 is a structural schematic diagram of a computer-readable storage medium provided in an embodiment of the present application. The computer-readable storage medium 500 stores a program code 510, and the program code 510 is configured to, when invoked by the processor, enable the vehicle to execute the service subscription method shown in FIGS. 4, 5, and 9 provided in the embodiment of the present application or enable the cloud to execute the service subscription method shown in FIGS. 10 and 11 provided in the embodiment of the present application.

The computer-readable storage medium 500 may be a flash memory, an Electrically-Erasable Programmable Read-Only Memory (EEPROM), an Erasable Programmable Read-Only Memory (EPROM), a hard disk or ROM and other electronic memory. The computer readable storage medium 500 may include a Non-Transitory Computer-Readable Storage Medium (Non-TCRSM). The computer-readable storage medium 500 has storage space for program codes 510 for executing any method steps in the above method. These program codes 510 can be read from or written into one or more computer program products. The program codes 510 can be compressed in an appropriate form.

Embodiments of the present application provide a service subscription method, a service subscription device, a vehicle and a storage medium. The method receives a subscription data packet sent from the cloud by adopting the MQTT protocol. The subscription data packet is encapsulated by the MQTT protocol. The payload part of the subscription data packet includes a SOME/IP protocol structure. The SOME/IP protocol structure includes a service identifier and a method identifier. The subscription data packet is parsed to obtain a service identifier and a method identifier. The service corresponding to the service identifier and the method identifier is subscribed to, thereby realizing dynamic subscription of services. There is no need to preset the maximum set of services required for subscription in advance at the beginning of software design. The required subscription services can be dynamically expanded according to needs, thereby improving the flexibility of service subscription. The configuration process of the configuration file can also be reduced, thereby improving software development efficiency.

Finally, it should be noted that the above embodiments are only used to illustrate the technical solutions of the present application, rather than to limit them. Although the present application has been described in detail with reference to the above embodiments, those skilled in the art should understand that they can still modify the technical solutions described in the above embodiments, or replace some of the technical features therein by equivalents; and these modifications or replacements do not drive the essence of the corresponding technical solutions out of the spirit and scope of the technical solutions of the embodiments of the present application.

## Claims

1. A service subscription method, in characterized that the method comprises:
using a Message Queuing Telemetry Transport (MQTT) protocol to receive a subscription data packet sent by a cloud (120), and the subscription data packet being encapsulated by using the MQTT protocol, and the payload part of the subscription data packet comprising a Scalable service-Oriented Middleware over IP (SOME/IP) protocol structure, and the SOME/IP protocol structure comprising a service identifier and a method identifier;
parsing the subscription data packet and obtaining the service identifier and the method identifier;
subscribing to the service corresponding to the service identifier and the method identifier.

2. The method according to claim 1, **characterized in that**, the SOME/IP protocol structure comprises a message type, parsing the subscription data packet and obtaining the service identifier and the method identifier comprises:
obtaining a payload part of the subscription data packet, and obtaining a SOME/IP protocol structure;
in response that the message type of the SOME/IP protocol structure is a specified type, obtaining the service identifier and the method identifier from the SOME/IP protocol structure.

3. The method according to claim 1, **characterized in that**, subscribing to the service corresponding to the service identifier and the method identifier comprises:
based on a service-oriented architecture, searching for a service node corresponding to the service identifier and the method identifier;
using the SOME/IP protocol to send the SOME/IP protocol structure to the service node to subscribe to the service corresponding to the service identifier and the method identifier.

4. The method according to any one of claims 1 to 3, **characterized in that**, before subscribing to the service corresponding to the service identifier and the method identifier, the method further comprises:
determining a subscription rule of the service based on a subscription format of the SOME/IP protocol structure;
in responses that the subscription rule indicates that the service is a service subscribed by number of times, uploading relevant data of the service to the cloud (120) when the service changes;
in responses that the subscription rule indicates that the service is a service subscribed by period, uploading the relevant data of the service to the cloud (120) according to a subscription period.

5. The method according to claim 4, **characterized in that** the method further comprises:
when a vehicle (110) is powered on, check whether the service subscribed by period is within the subscription period in the cloud (120);
in responses that the service subscribed by period falls within the subscription period of the cloud (120), subscribing to the service subscribed by period.

6. A service subscription method, in characterized that the method comprises:
obtaining a service and a subscription rule of the service;
encapsulating the service by using a SOME/IP protocol according to a subscription format corresponding to the subscription rule of the service, and forming a SOME/IP protocol structure;
encapsulating the SOME/IP protocol structure as a payload part of a MQTT protocol and forming a subscription data packet;
using the MQTT protocol to send the subscription data packet to a vehicle's cloud agent, and the vehicle's cloud agent parsing the subscription data packet, and obtaining a service identifier and a method identifier, and subscribing to the service corresponding to the service identifier and the method identifier.

7. The method according to claim 6, **characterized in that**, encapsulating the service by using a SOME/IP protocol according to a subscription format corresponding to the subscription rule of the service, and forming a SOME/IP protocol structure comprises:
in response that the subscription rule of the service indicates that the service is a service subscribed by number of times, encapsulating the service by using a single subscription format and the SOME/IP protocol to form the SOME/IP protocol structure;
in response that the subscription rule of the service indicates that the service is a service subscribed by period, encapsulating the service by using a format subscribed by period and the SOME/IP protocol to form the SOME/IP protocol structure.

8. The method according to claim 6, **characterized in that**, before encapsulating the SOME/IP protocol structure as a payload part of a MQTT protocol and forming a subscription data packet, the method further comprises:
when receiving a trigger event of a subscription service, obtaining a service subscribed by period, and the service subscribed by period is corresponding to the trigger event;
when detecting the trigger event, using the periodic subscription format and the SOME/IP protocol to encapsulate the service subscribed by period, and forming the SOME/IP protocol structure.

9. The method according to any one of claims 6 to 8, **characterized in that**, obtaining the service and the subscription rule of the service:
obtaining a service corresponding to a vehicle model in a service-oriented architecture;
determining the subscription rule of the service according to business needs.

10. A service subscription device, in characterized that the device comprises:
a signal receiving module (210), used to use a MQTT protocol to receive a subscription data packet sent by a cloud (120), wherein the subscription data packet is encapsulated by using the MQTT protocol, and a payload part of the subscription data packet comprises a SOME/IP protocol structure, and the SOME/IP protocol structure comprises a service identifier and a method identifier;
a signal parsing module (220), used to parse the subscription data packet and obtain the service identifier and the method identifier;
a service subscription module (230), used to subscribe to the service corresponding to the service identifier and the method identifier.

11. A service subscription device, in characterized that the device comprises:
an information acquisition module (310), used to obtain a service and a subscription rule of the service;
a first encapsulation module (320), used to encapsulate the service by using the SOME/IP protocol according to a subscription format corresponding to the subscription rule of the service and form a SOME/IP protocol structure, wherein the SOME/IP protocol structure comprises a service identifier and a method identifier;
a second encapsulation module (330), used to encapsulate the SOME/IP protocol structure into a payload part of the MQTT protocol to form a subscription data packet;
a signal sending module (340), used to send the subscription data packet to a vehicle's cloud agent using the MQTT protocol, so that the vehicle's cloud agent parses the subscription data packet, and obtains the service identifier and the method identifier, and subscribes to the service corresponding to the service identifier and the method identifier.

12. A vehicle (110), in characterized that the vehicle (110) comprises:
a memory (410);
one or more processors (420);
one or more applications, the one or more applications are stored in the memory (410) and are used to enable the vehicle (110) to execute a method according to any one of claims 1 to 5 when invoked by the one or more processors (420).

13. A computer-readable storage medium, **characterized in that** the computer-readable storage medium stores program codes, and the program codes are used to enable a vehicle (110) to execute a method according to any one of claims 1 to 5 or enable a cloud (120) to execute a method according to any one of claims 6 to 9 when invoked by one or more processors (420).
